# EUROPÄISCHE PATENTANMELDUNG

(11) **EP 4 280 126 A1**
(43) Veröffentlichungstag der Anmeldung: **22.11.2023**
(21) Anmeldenummer: 22174628.2
(22) Anmeldetag: 20.05.2022
(51) Int. Cl.: G06Q 10/00, G06Q 50/04

(54) **VERFAHREN ZUR BESTIMMUNG VON VERSCHLEISS UND ABNUTZUNG EINES PRODUKTIONSMITTELS**

(71) Anmelder: Siemens Aktiengesellschaft, 80333 München (DE)
(72) Erfinder: Geipel, Markus Michael, 80799 München (DE); Krubasik, Edward Cornelius, 82319 Starnberg (DE); Montrone, Francesco, 85521 Riemerling (DE); Palacios Valdes, Carlos Andres, 81739 München (DE); Reitinger, Axel, 81377 München (DE); Siegel, Tobias, 92318 Neumarkt in der Oberpfalz (DE); Sutor, Ariane, 81543 München (DE); Weinert, Nils, 80798 München (DE)
(74) Vertreter: Siemens Patent Attorneys

(57) **Zusammenfassung**

Die Erfindung betrifft ein Verfahren zur Ermittlung eines Verschleißes eines Produktionsmittels (1) einer Produktionsstätte (10). Zur Verbesserung der Bestimmung des Verschleißes und/oder der Abnutzung des Produktionsmittels wird vorgeschlagen, dass mittels mindestens eines Sensors (2) jeweils Messdaten (4) zu mindestens einem Zustand des Produktionsmittels (1) generiert werden, wobei die Messdaten (4) an eine Auswerteeinheit (3) übertragen werden, insbesondere gesichert übertragen werden, wobei die Auswerteeinheit (3) Teil der Produktionsstätte (10) ist, wobei in Abhängigkeit der Messdaten (4) der Verschleiß des Produktionsmittels (1) mittels der Auswerteeinheit (3) bestimmt wird. Ferner betrifft die Erfindung eine Auswerteeinheit (3) eingerichtet zur Durchführung eines derartigen Verfahrens, wobei die Auswerteeinheit (3) für die Anordnung in der Produktionsstätte (10) vorgesehen ist, die das Produktionsmittel (1) umfasst, dessen Verschleiß durch die Auswerteeinheit (3) zur Bestimmung vorgesehen ist. Die Erfindung betrifft weiter ein Produktionssystem (8) umfassend mindestens ein Produktionsmittel (1) und eine derartige Auswerteeinheit (3).

## Beschreibung

Die Erfindung betrifft ein Verfahren zur Bestimmung eines Verschleißes eines Produktionsmittels einer Produktionsstätte. Ferner betrifft die Erfindung eine Auswerteeinheit eingerichtet zur Durchführung eines derartigen Verfahrens. Die Erfindung betrifft weiter ein Produktionssystem umfassend mindestens ein Produktionsmittel und eine derartige Auswerteeinheit.

Im Rahmen der Produktion von Produkten durch Produktionsmittel kommt es zu einer Alterung der Produktionsmittel. Diese unterliegen damit regelmäßig der Wartung und Reparatur. Mit fortschreitender Alterung müssen Produktionsmittel auch ersetzt werden.

Die Alterung geschieht in erster Linie aufgrund von Verschleiß. Dieser ist ein augenblickliches Maß für den Verlust an Lebensdauer. Der über eine bestimmte Zeit wirkende Verschleiß wird als Abnutzung beschrieben.

Heutzutage erfolgt die Bestimmung von Verschleiß und Abnutzung, beispielsweise für das Vermieten und die damit verbundene Verrechnung ("Pay per Use"), von Produktionsmitteln in erster Linie nach stark vereinfachten Größen wie beispielsweise der Zählung von verschiedenen betrieblich auftretenden Ereignissen oder einer erfassten Betriebsdauer. Darauf aufbauende Verrechnungsmodelle werden dann beispielsweise durch
- Pay per Schweißpunkt,
- Pay per Betriebsstunden oder
- Pay per Volumen
realisiert.

Diese Modelle beziehen jedoch nicht den Verschleiß oder die Abnutzung ein und berücksichtigen damit auch nicht den Verbrauch der Gesamtlebensdauer eines vermieteten Gerätes, Produktionsmittels oder Produktionssystems. Denn der Verschleiß und damit die Restlebensdauer hängen nicht nur von der Einsatzdauer und -häufigkeit ab, sondern auch von Einsatzweise, insbesondere die Betriebsweise oder die Belastung während der Produktion oder der Produktionsschritte.

Zur Beschreibung der betrieblichen Nutzung werden derzeit Betriebsstunden, Anzahl Einsätze etc. als Annäherung für die Beschreibung der Abnutzung herangezogen. Bei der Vermietung von elektrischen Komponenten werden diese Faktoren als veränderliche Preisanteile beim Betreibermodell zugrunde gelegt, die meist am Ende eines Abrechnungszeitraumes für eine Preisberechnung abgelesen werden.

Der Erfindung liegt die Aufgabe zugrunde die Bestimmung des Verschleißes und/oder der Abnutzung eines Produktionsmittels zu verbessern.

Diese Aufgabe wird durch ein Verfahren zur Bestimmung eines Verschleißes eines Produktionsmittels einer Produktionsstätte gelöst, wobei mittels mindestens eines Sensors jeweils Messdaten zu mindestens einem Zustand des Produktionsmittels generiert werden, wobei die Messdaten an eine Auswerteeinheit übertragen werden, insbesondere gesichert übertragen werden, wobei die Auswerteeinheit Teil der Produktionsstätte ist, wobei in Abhängigkeit der Messdaten der Verschleiß des Produktionsmittels mittels der Auswerteeinheit bestimmt wird. Ferner wird diese Aufgabe durch eine Auswerteeinheit, eingerichtet zur Durchführung eines derartigen Verfahrens gelöst, wobei die Auswerteeinheit für die Anordnung in der Produktionsstätte vorgesehen ist, die das Produktionsmittel umfasst, dessen Verschleiß durch die Auswerteeinheit zur Bestimmung vorgesehen ist. Die Aufgabe wird weiter durch ein Produktionssystem umfassend mindestens ein Produktionsmittel und eine derartige Auswerteeinheit gelöst.

Der Erfindung liegt unter anderem die Erkenntnis zugrunde, dass sich die Bestimmung des Verschleißes und der damit einhergehenden Abnutzung dadurch verbessern lässt, dass die einzelnen Arbeitspunkte bei dem Betrieb des Produktionsmittels für die Bestimmung des Verschleißes herangezogen werden. Durch die Kenntnis des Verschleißes kann dieser im Produktionsprozess berücksichtigt und reduziert werden. Dies ermöglicht eine verschleißärmere Produktion des Produktes. So kann beispielsweise der Produktionsprozess verlangsamt werden, um einen hohen Verschleiß der Produktionsmittel zu vermeiden und um damit den Produktionsprozess zu optimieren. Eine Bewertung des Produktionsprozesses kann dabei beispielsweise anhand der Produktionskosten vorgenommen werden. Diese erlauben, ein Optimum zwischen dem Wert an produzierten Produkten und Produktionskosten zu finden.

Auf dieser Grundlage bietet das vorliegende Verfahren dahingehend Vorteile, die Produktionskosten anhand des Verschleißes ermitteln zu können. Durch das Verfahren zur Ermittlung des Verschleißes kann ein transparentes Bewertungssystem und technisches Abrechnungssystem angegeben werden, das auf einem Verschleißmodell beruht.

Die Bereitstellung des Verschleiß-Modells erfolgt mit Hilfe zusätzlicher Hardware wie Sensoren für Messungen und der konfigurierbaren Auswerteeinheit für die Verschleißmodellberechnung. Die von der Auswerteeinheit ermittelten Daten können dann an einem beliebigen Ort gespeichert oder weiterverarbeitet werden.

Die konfigurierbare Auswerteeinheit, beispielsweise realisiert als eine Edge Box, erlaubt eine spezifische Anpassung des Verschleißmodells an das Produktionsmittel, auch als Produktionsbetriebsmittel bezeichnet, und wird dabei in der Produktionsstätte angeordnet. Auf einfache Weise kann eine Anordnung der Auswerteeinheit dabei an einer Hutschiene in einem Steuerschrank erfolgen, der auch zur Aufnahme von Steuergeräten des Produktionsmittels vorgesehen ist.

Die Berechnungen in der Auswerteinheit können beispielsweise aus einer Cloud oder einer industrial Edge App aus der Ferne konfiguriert werden.

Die durch die Sensoren generierten Messwerte beschreiben die für den Verschleiß und Abnutzung relevanten und erfassten Daten. Diese können auch Firmen-KnowHow enthalten, die zu einem Betriebsgeheimnis gehören. Daher wird die Auswerteeinheit innerhalb der Produktionsstätte angeordnet, so dass diese kritischen Werte die Produktionsstätte nicht verlassen. Ein Abfluss von KnowHow kann auf diese Weise zuverlässig verhindert werden. Dies ist bei einer cloud-basierten Lösung oder einer Industrial Edge App nicht zwangsläufig gegeben, so dass das vorgeschlagene Verfahren eine besonders hohe Akzeptanz bei Betreibern von Produktionsstätten findet. Dies basiert darauf, dass keine technischen Produktionsdaten die Produktionsstätte verlassen. Als weiterer Vorteil des vorgeschlagenen Verfahrens ist zu nennen, dass auch die erforderlichen Datenraten zur Cloud deutlich geringer sind.

Bei der Übertragung der Messdaten an die Auswerteeinheit sollen diese vorteilhafterweise gesichert übertragen werden. Gesichert heißt in diesem Zusammenhang, dass diese Daten vor Manipulation gesichert übertragen werden. Aufgrund der hohen wirtschaftlichen Bedeutung dieser Messdaten ist das Risiko derer Manipulation hoch. Dabei soll die gesicherte Übertragung eine Sicherheit gegenüber physikalischer und/oder digitaler Manipulation darstellen. In Bezug auf Faktoren wie Übertragungskapazität, Übertragungsschnelligkeit, Fehlersicherheit haben sich beispielsweise physikalische Siegel oder Blockchain als günstige Ausgestaltungen für eine gesicherte Übertragung bei der Verschleißbestimmung von Produktionsmitteln als vorteilhaft erwiesen.

Darüber hinaus hat es sich insbesondere für eine Verwendung der Verschleißdaten und Abnutzungsdaten in Abrechnungssystemen für die Bewertung der eigenen Produktionsmittel oder auch der Vermietung von Produktionsmitteln als vorteilhaft erwiesen, dass die Auswerteeinheit ein Konfigurieren und Hinterlegen von digitalen Plausibilitätsregeln unterstützt und/oder selbst digitale Plausibilitätsüberprüfungen durchführt.

Für eine Bewertung des Lebensdauerverlustes können beispielsweise das Auftreten von Verschleißsituationen gezählt werden, bei dem der Verschleiß einen vorgegebenen Grenzwert überschreitet. Ebenso kann, alternativ oder ergänzend, kann gezählt werden, wie oft in einem gegebenen Zeitintervall ein vorgebbarer Verschleißgrenzwert überschritten wird. Diese Werte eignen sich auch, um den Verschleiß, die Abnutzung und den Lebensdauerverlust des Produktionsmittels kostenmäßig bewerten zu können.

Darüber hinaus kann das Produktionsmittel derartig betrieben werden, dass ein vorgegebener Verschleiß nicht überschritten wird. Da mit zunehmendem Verschleiß auch die Ausfallwahrscheinlichkeit des Produktionsmittels steigt, kann dadurch eine höhere Zuverlässigkeit und Verfügbarkeit des Produktionsmittels erreicht werden.

Die durch das Verfahren gewonnenen Daten zum Verschleiß und zur Abnutzung können bei der Nutzung von Lebensdauermodellen und zur Steuerung des Produktionsprozesses genutzt werden. Kostentreiber in der Produktion können damit zuverlässig erkannt werden. Unterschiedliche Produktionsstätten können hinsichtlich ihrer Produktionskosten bei Berücksichtigung von Verschleiß und Abnutzung miteinander verglichen und optimiert werden. Darüber hinaus kann bei der Vermietung von Produktionsmitteln die Berücksichtigung des Verschleißes und der Abnutzung zu einem optimierten Geschäftsmodell bei Mieter und Vermieter führen, da eine aussagefähige Transparenz über die Nutzung der Produktionsmittel vorhanden ist, ohne jedoch Produktionsgeheimnisse preisgeben zu müssen. Dies vereinfacht die auf Basis der Berechnung von Verschleiß und damit verbundenem Lebensdauerverbrauch die Preisfindung in Betreibermodellen.

Für die Planung und Gestaltung von Produktionsabläufen hat es sich als vorteilhaft erwiesen, den Betrieb der Produktionsmittel zu beschreiben und den Verschleiß bzw. die Abnutzung zu modellieren. Aus diesen Daten können auch Maßnahmen zur Wartung und Reparatur abgeleitet werden.

Die Optimierung des Einsatzes von Produktionsmittel kann dabei auf einfache Weise dadurch geschehen, dass Produktionsschritte, Produktionszeiten oder Produkte bzw. Teilprodukte, die aus der Produktion hervorgehen mit Kosten hinterlegt werden. Die durch die Auswerteeinheit bestimmten Werte, insbesondere Kosten, erlauben eine Bewertung und Zuordnung zu den Produktionsschritten, Produktionsmitteln und den dadurch entstandenen Produkten bzw. Teilprodukten. Diese Kosten erlauben es, die Produktion hinsichtlich wirtschaftlicher Gesichtspunkte zu optimieren. Vielfach führt die wirtschaftliche Optimierung auch zu einer ressourcenschonenden und verbrauchsreduzierten Produktion und ist somit auch im Hinblick auf Ökologie besonders vorteilhaft und nachhaltig.

Neben der Optimierung der technischen Abläufe der Produktion, bietet die Kenntnis des Verschleißes und/oder der Abnutzung auch die Möglichkeit, Produktionsmittel und deren Betrieb im Rahmen von Überlassungen wie Miete oder Leasen nutzungsgerecht in Rechnung zu stellen. Durch die Orientierung am Verschleiß kann dadurch nicht nur ein wirtschaftlicher Betrieb des Produktionsmittels gefördert werden, sondern auch eine schonende und damit langfristige und ökologische vorteilhafte Nutzung des Produktionsmittels sichergestellt werden.

Der über die Zeit akkumulierte Lebensdauerverbrauch durch Kenntnis des Verschleißes und/oder der Abnutzung berücksichtigt die Betriebsweise des Produktionsmittels und ist damit genauer und geeigneter als die bisher bekannten Bewertungskriterien. Das Abrechnungssystem bei Vermietung erlaubt dabei gleichzeitig eine Sicherung gegen Manipulation und eine Berechnung "on premises", so dass sensible Betriebsdaten nicht die Fabrik oder die Produktionsstätte verlassen.

Die Lösung ermöglicht den Herstellern der Maschinen bzw. der Geräte, insbesondere bei der Vermietung oder dem Leasing von Produktionsmitteln, neue Abrechnungsmodelle anzubieten. Dies ermöglicht die Kombination von Abrechnungssystemen in globalen Infrastrukturen mit der vorgeschlagenen Verschleißbestimmung bzw. Abnutzungsbestimmung von lokalen Maschinen. Dabei können neben den Messdaten Lebensdauermodelle und/oder Kennzahlen zur Bestimmung herangezogen werden.

Die erzeugten Messdaten sowie optional Lebensdauer- und Verschleißmodelle erlauben eine bessere Bewertung des Produktionsprozesses, insbesondere hinsichtlich einer Preisberechnung bei Verrechnungsmodellen, mit folgenden Vorteilen:
Aufwendungen und Abschreibungen für die Amortisation können besser getroffen werden. Dies führt zu einem wirtschaftlichen Vorteil aufgrund eines leistungsgerechten Preises für das durch die Produktionsmittel produzierte Produkt.

Die Kenntnis von Verschleißtreibern ermöglicht einen nachhaltigeren Einsatz des Produktionsmittels, da der ressourcen-schonender Einsatz anhand von Kennzahlen, wie beispielsweise Produktionskosten, erkannt wird und mit niedrigerem Preis belohnt wird. Die früher übliche rein Zeit-basierten Nutzung von Produktionsmitteln im Dauereinsatz förderte nur den Blick auf die Stückzahlen. Dabei blieben Optimierungspotentiale unerkannt.

Das transparente technische Bewertungssystem und das darauf basierende Abrechnungssystem, sowohl für interne Kosten als auch für externe Kosten wie beispielsweise Miete oder Leasingrate erlaubt eine detaillierte Bewertung und kaufmännische Verrechnung des Produktionsprozesses, da es den Verschleiß und die Abnutzung berücksichtigt.

Die bereits genannten technischen Eigenschaften des vorgeschlagenen Verfahrens erlauben die Erstellung eines Abrechnungssystems und die Auswertung eines Verschleißmodells, das die Grundlage für die Preisberechnung ist und schafft somit Vorteile im Hinblick auf:
- Mehr Kundenakzeptanz für Preismodelle,
- mehr Nachhaltigkeit, Ressourcen-schonender Betrieb von Produktionsmittel und ganzen Produktionsanlagen und
- der Möglichkeit zur Erschließung von neuen Geschäftsmodellen.

Bei einer vorteilhaften Ausgestaltung der Erfindung wird bei Ausbleiben von an die Auswerteeinheit übertragenen Messdaten der Zustand des Produktionsmittels anhand eines Ausfallmodells bestimmt. Dies ist vorteilhaft, da mit dem Ausfall eines Sensors für die Verschleißberechnung dadurch nicht der gesamte Produktionsprozess gefährdet wird. Auch bei Ausfall eines entsprechenden Sensors kann die Produktion aufrechterhalten werden.

Bei Ausfall von einem oder mehreren Sensoren und damit einhergehenden Ausfall von Messdaten kann ein Ausfallmodell hinterlegt werden, das sicherstellt, dass die Verschleißbestimmung oder ein darauf aufgebautes Abrechnungssystem nicht die Verfügbarkeit des Produktionssystem negativ beeinträchtigen. Das Ausfallmodell ermittelt dann die für die Bestimmung des Verschleißes oder der Abnutzung erforderlichen Messdaten. Dabei können Größen wie beispielsweise der Wirkungsgrad in Abhängigkeit vom Arbeitspunkt, Temperaturmesswerte etc. für die Berechnung des Verschleißes herangezogen werden, die zwar die Genauigkeit der Verschleißberechnung herabsetzen, jedoch einen Ausfall des Produktionsmittels vermeiden. Dies erhöht die Verfügbarkeit des Produktionsmittels.

Bei einer weiteren vorteilhaften Ausgestaltung der Erfindung wird aus dem zeitlichen Verlauf des Verschleißes die Abnutzung des Produktionsmittels ermittelt. Auf einfache Weise wird die Abnutzung aus der Integration des Verschleißes über der Zeit ermittelt. Neben der augenblicklichen Belastung des Produktionsmittels kann darüber hinaus ein Lebensdauerverbrauch über einen bestimmten Zeitraum angegeben werden. Bei dem Zeitraum kann es sich um das Zeitintervall für die Produktion eines Produktes handeln, so dass der Verschleiß für die Produktion einer Einheit des Produktes ermittelt werden kann.

Alternativ ist es auch möglich, einen hohen Verschleiß in der Abnutzungsberechnung mit einem Korrekturfaktor zu multiplizieren. Dadurch kann in der Bewertung der Abnutzung ein besonders hoher Verschleißzustand erkannt und in der Steuerung des Produktionsprozesses vermieden werden. Der Korrekturfaktor erhalt dann vorteilhafterweise einen Wert größer als eins. Da ein Ausfall des Produktionsmittels zu Zeiten mit höherem Verschleiß wahrscheinlicher wird, kann mit dem Korrekturfaktor in der Berechnung der Abnutzung das Ausfallrisiko des Produktionsmittels reduziert und die Verfügbarkeit des Produktionsmittels signifikant gesteigert werden.

Bei einer weiteren vorteilhaften Ausgestaltung der Erfindung wird die zur Durchführung eines Produktionsschrittes mit dem Produktionsmittel einhergehende Abnutzung und/oder der zur Durchführung des Produktionsschrittes mit dem Produktionsmittel einhergehende Verschleiß ermittelt. Dabei wird der Verschleiß oder die Abnutzung direkt einem Prozessschritt zugeordnet. Dadurch ist es möglich, die Produktion hinsichtlich ihrer Kosten und auch ihrer Ausfallwahrscheinlichkeit zu bewerten. Schafft man für verschleißintensive oder abnutzungsintensive Produktionsschritte Redundanzen, beispielsweise durch parallele Produktionsschritte, so kann der Produktionsprozess bei geringen Zusatzkosten ausfallsicherer gestaltet werden.

Bei einer weiteren vorteilhaften Ausgestaltung der Erfindung wird der bestimmte Verschleiß und/oder die ermittelte Abnutzung an eine Speichereinheit oder Verarbeitungseinheit außerhalb der Produktionsstätte übermittelt. Aus dem Ergebnis der Verschleißermittlung oder der Abnutzungsermittlung sind im Allgemeinen keine Rückschlüsse mehr auf die Ausgestaltung des Produktionsprozesses ableitbar. Daher können die Werte zum Verschleiß und zur Abnutzung auch außerhalb der Produktionsschritte gespeichert werden. Dies kann genutzt werden, um unterschiedliche Produktionsstätten hinsichtlich ihrer Produkte und/oder ihres Produktionsprozesses zu vergleichen. Darüber hinaus bietet es auch die Möglichkeit, einem Vermieter von Produktionsmittels Abrechnungsdaten bereitzustellen, ohne einen Einblick in den Produktionsprozess liefern zu müssen. Gleichzeitig kann mit den Abnutzungsdaten eine nutzungsgemäße Verrechnung des Mietgegenstands, wie eines Produktionsmittels, erfolgen.

Bei einer weiteren vorteilhaften Ausgestaltung der Erfindung wird ein Wert für den durch die Produktion eines Produktes einhergehender Verschleiß ermittelt und dem Produkt zuordenbar gespeichert. Die Zuordnung des Verschleißes und/oder der Abnutzung zu einem Produkt erlaubt es, die Entstehungskosten für das Produkt und eines Zwischenproduktes bei der Produktion des Produktes genauer zu ermitteln. Dies ermöglicht einer internen Kostenrechnung eine Zuordnung der Abnutzung der Produktionsmittel auf die einzelnen Produkte. Dabei ist es eine zusätzliche mögliche Funktion des Abrechnungssystems, dass es für Zeitabschnitte die Zuordnung einer Messung zu Kennungen erlaubt, die eine eindeutige Zuordnung von Preisanteilen zu jedem Produkt ermöglicht, so dass Betreiber ihre Kosten auf die einzelnen Produkte umlegen können.

Bei einer weiteren vorteilhaften Ausgestaltung der Erfindung wird ein weiterer Wert für einen über einen vorbestimmten Zeitraum durch den Betrieb des Produktionsmittels einhergehender Verschleiß ermittelt und dem vorbestimmten Zeitraum zuordenbar gespeichert. Die Zuordnung des Verschleißes und/oder der Abnutzung zu einer Nutzungsdauer des Produktionsmittels erlaubt es, die Kosten für die Produktion, insbesondere die Produktionskosten für einen Fertigungsstandort, genauer zu ermitteln. Dies ermöglicht einer internen Kostenrechnung eine Zuordnung der Abnutzung der Produktionsmittel auf die Nutzungszeiten der Produktionszeiten. Dabei ist es eine zusätzliche mögliche Funktion des Abrechnungssystems, dass es für Zeitabschnitte die Zuordnung einer Messung zu Kennungen erlaubt, die eine eindeutige Zuordnung von Preisanteilen zu jedem Produktionszeitraum ermöglicht, so dass Betreiber ihre Kosten auf die einzelnen Produktionsmittel, Nutzungszeiträume und Produkte umlegen können.

Im Folgenden wird die Erfindung anhand der in den Figuren dargestellten Ausführungsbeispiele näher beschreiben und erläutert. Es zeigen:
- FIG 1: eine schematische Übersicht des Verfahrens zur Verschleißermittlung innerhalb eines Produktionssystems und
- FIG 2: eine schematische Übersicht des Verfahrens zur Verschleißermittlung über die Grenzen einer Produktionsstätte.

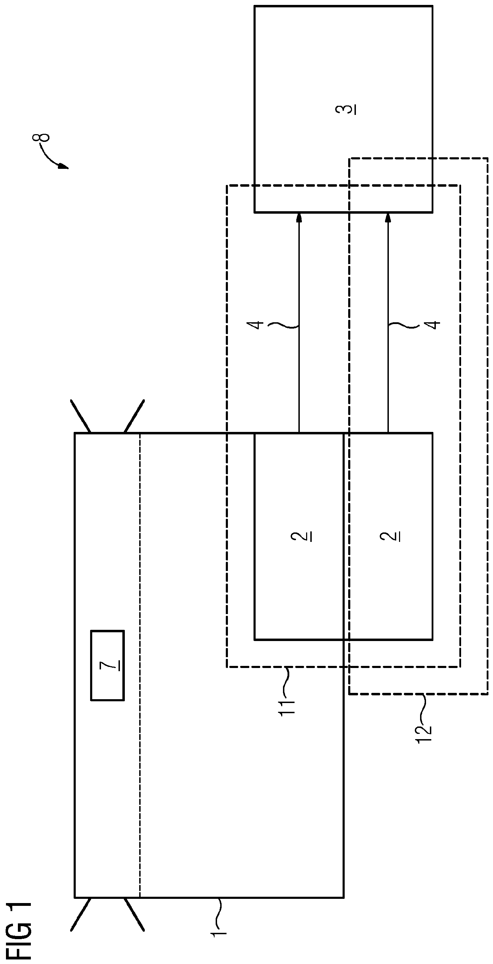

Die FIG 1 zeigt den Aufbau eines Produktionssystems 8. Das Produktionssystem 8 umfasst mindestens ein Produktionsmittel 1 und eine Auswerteeinheit 3. Das Produktionsmittel 1 und die Auswerteeinheit 3 sind Teil einer nicht näher in FIG 1 dargestellten Produktionsstätte 10. Mit Hilfe des Produktionsmittels 1 lässt sich ein Produkt 7 fertigen. Dieses Produkt 7 kann dabei beispielsweise wie dargestellt das Produktionsmittel 1 wie in einer Fließbandfertigung durchlaufen.

Um den Verschleiß und/oder die Abnutzung des Produktionsmittels 1 bestimmen zu können, umfasst das Produktionssystem 8 Sensoren 2. Man unterscheidet dabei die Sensoren 2 in interne Sensoren 2, die innerhalb des Produktionsmittels 1 angeordnet sind, und in externe Sensoren 2, die außerhalb des Produktionsmittels 1 angeordnet sind. Mit diesen Sensoren 2 werden Messdaten 4 generiert. Diese Messdaten 4 werden gesichert an die Auswerteeinheit 3 übermittelt. Bei der gesicherten Übermittlung wird ein mutwilliges oder unbeabsichtigtes Verändern der Daten zuverlässig verhindert. Dazu bieten sich verschiedene Verfahren an. Sowohl für interne Sensoren 2 als auch externe Sensoren 2 eignet sich ein physischer Manipulationsschutz 11, dargestellt als ein gestrichelter Kasten um diese Sensoren 2 herum, um ein Verändern oder Manipulieren der Messdaten 4 zu verhindern und eine gesicherte Übertragung sicherzustellen. Für die externen Sensoren 2 eignet sich darüber hinaus oder alternativ auch ein digitaler Manipulationsschutz 12, um die Messdaten 4 gesichert zu übermitteln.

Die Auswerteeinheit 3 ermittelt aus den Messdaten 4 den Verschleiß und/oder die Abnutzung des Produktionsmittels 1. Dieser Verschleiß oder die Abnutzung kann dabei auf ein durch das Produktionsmittel 1 hergestelltes Produkt 7 bezogen werden, um die Produktionskosten für ein Produkt 7 zu bestimmen und optimieren zu können.

Die Auswerteeinheit 3 kann dabei als Hardwarebaugruppe, insbesondere als Edge Box ausgebildet sein. Die zur Berechnung des Verschleißes oder der Abnutzung erforderlichen Messdaten 4 werden von Sensoren 2 generiert. Die Sensoren 2 können beispielsweise als eine Smart Box ausgebildet oder in dieser angeordnet sein. Dabei können die Sensoren 2 derart angeordnet sein, dass diese in das Produktionsmittel 1 integriert sind, und als interne Sensoren 2 bezeichnet werden.

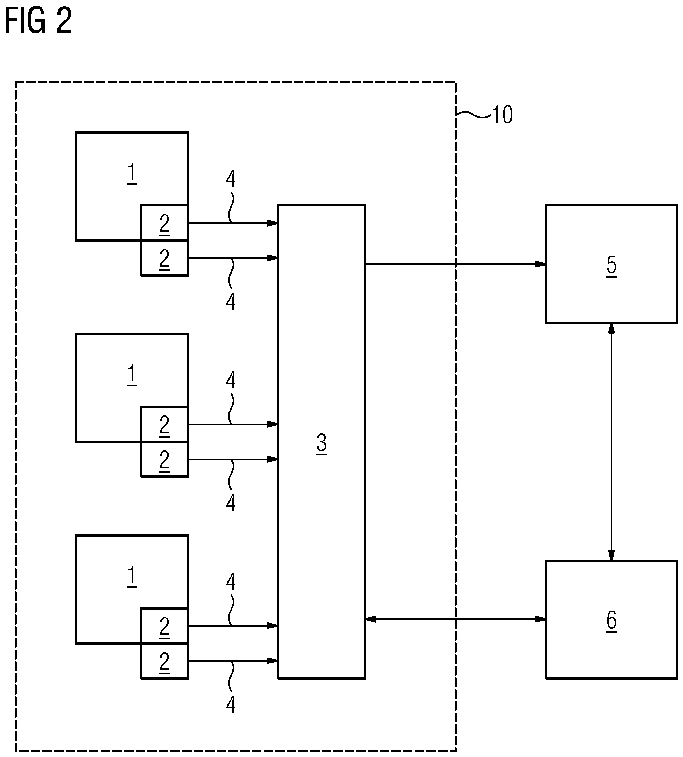

Die FIG 2 zeigt eine Produktionsstätte 10 mit mehreren Produktionsmitteln 1. Sensoren 2, interne und/oder externe Sensoren 2, ermitteln für jedes Produktionsmittel 1 Messdaten 4, die gesichert an die Auswerteeinheit 3 übertragen werden. Die von der Auswerteeinheit 3 berechneten Werte für den Verschleiß und/oder die Abnutzung können an eine Speichereinheit 5 und/oder eine Verarbeitungseinheit 6 außerhalb der Produktionsstätte 10 übertragen werden. Da sich aus diesen Werten kein Produktions-KnowHow mehr ableiten lässt, können diese Informationen auch an Komponenten außerhalb der Produktionsstätte 10, beispielsweise an Geschäftspartner zur Vermietung oder Leasing von Produktionsmitteln 1, übertagen und dort gespeichert oder weiterverarbeitet werden. Ebenso sind diese zur Speicherung und/oder weiteren Verarbeitung vorgesehenen Daten geeignet, um eine Optimierung der Fertigung, der Produktionsmittel 1 und/oder der Produktionsstätte 10 vornehmen zu können.

Neben der weiteren Auswertung der Werte zu Verschleiß und/oder Abnutzung, kann die Verarbeitungseinheit 6 auch dazu herangezogen werden, die Berechnung der Auswerteeinheit 3 zu parametrieren. Die Verarbeitungseinheit 6 kann dazu beispielsweise als industrial edge oder Cloud App ausgebildet sein.

Zusammenfassend betrifft die Erfindung ein Verfahren zur Ermittlung eines Verschleißes eines Produktionsmittels einer Produktionsstätte. Zur Verbesserung der Bestimmung des Verschleißes und/oder der Abnutzung des Produktionsmittels wird vorgeschlagen, dass mittels mindestens eines Sensors jeweils Messdaten zu mindestens einem Zustand des Produktionsmittels generiert werden, wobei die Messdaten an eine Auswerteeinheit übertragen werden, insbesondere gesichert übertragen werden, wobei die Auswerteeinheit Teil der Produktionsstätte ist, wobei in Abhängigkeit der Messdaten der Verschleiß des Produktionsmittels mittels der Auswerteeinheit bestimmt wird. Ferner betrifft die Erfindung eine Auswerteeinheit eingerichtet zur Durchführung eines derartigen Verfahrens, wobei die Auswerteeinheit für die Anordnung in der Produktionsstätte vorgesehen ist, die das Produktionsmittel umfasst, dessen Verschleiß durch die Auswerteeinheit zur Bestimmung vorgesehen ist. Die Erfindung betrifft weiter ein Produktionssystem umfassend mindestens ein Produktionsmittel und eine derartige Auswerteeinheit.

## Patentansprüche

1. Verfahren zur Bestimmung eines Verschleißes eines Produktionsmittels (1) einer Produktionsstätte (10), wobei mittels mindestens eines Sensors (2) jeweils Messdaten (4) zu mindestens einem Zustand des Produktionsmittels (1) generiert werden, wobei die Messdaten (4) an eine Auswerteeinheit (3) übertragen werden, insbesondere gesichert übertragen werden, wobei die Auswerteeinheit (3) Teil der Produktionsstätte (10) ist, wobei in Abhängigkeit der Messdaten (4) der Verschleiß des Produktionsmittels (1) mittels der Auswerteeinheit (3) bestimmt wird.

2. Verfahren nach Anspruch 1, wobei bei Ausbleiben von an die Auswerteeinheit (3) übertragenen Messdaten (4) der Zustand des Produktionsmittels (1) anhand eines Ausfallmodells bestimmt wird.

3. Verfahren nach einem der Ansprüche 1 oder 2, wobei aus dem zeitlichen Verlauf des Verschleißes die Abnutzung des Produktionsmittels (1) ermittelt wird.

4. Verfahren nach einem der Ansprüche 1 bis 3, wobei die zur Durchführung eines Produktionsschrittes mit dem Produktionsmittel (1) einhergehende Abnutzung und/oder der zur Durchführung des Produktionsschrittes mit dem Produktionsmittel (1) einhergehende Verschleiß ermittelt wird.

5. Verfahren nach einem der Ansprüche 1 bis 4, wobei der bestimmte Verschleiß und/oder die ermittelte Abnutzung an eine Speichereinheit (5) oder Verarbeitungseinheit (6) außerhalb der Produktionsstätte übermittelt wird.

6. Verfahren nach einem der Ansprüche 1 bis 5, wobei ein Wert für den durch die Produktion eines Produktes (7) einhergehender Verschleiß ermittelt und dem Produkt (7) zuordenbar gespeichert wird.

7. Verfahren nach einem der Ansprüche 1 bis 6, wobei ein weiterer Wert für einen über einen vorbestimmten Zeitraum (T) durch den Betrieb des Produktionsmittels (1) einhergehender Verschleiß ermittelt und dem vorbestimmten Zeitraum (T) zuordenbar gespeichert wird.

8. Auswerteeinheit (3) eingerichtet zur Durchführung eines Verfahrens nach einem der Ansprüche 1 bis 7, wobei die Auswerteeinheit (3) für die Anordnung in der Produktionsstätte (10) vorgesehen ist, die das Produktionsmittel (1) umfasst, dessen Verschleiß durch die Auswerteeinheit (3) zur Bestimmung vorgesehen ist.

9. Produktionssystem (8) umfassend mindestens ein Produktionsmittel (1) und eine Auswerteeinheit (3) nach Anspruch 8.
